# DEMANDE DE BREVET EUROPEEN

(11) **EP 4 344 034 A1**
(43) Date de publication de la demande: **27.03.2024**
(21) Numéro de dépôt: 23198810.6
(22) Date de dépôt: 21.09.2023
(51) Int. Cl.: H02K 55/00, H02K 1/02, H02K 9/22

(54) **STATOR AMÉLIORÉ DE MOTEUR SUPRACONDUCTEUR, MOTEUR SUPRACONDUCTEUR D'AÉRONEF ET AÉRONEF**

(30) Priorité: 22.09.2022 FR 2209588
(71) Demandeur: Airbus SAS, 31700 Blagnac (FR)
(72) Inventeur: COLLE, Alexandre, 31700 BLAGNAC (FR); ABDOUH, Reda, 31700 BLAGNAC (FR); CURELLI, Robin, 31700 BLAGNAC (FR)
(74) Mandataire: Cabinet Le Guen Maillet

(57) **Abrégé**

L'invention concerne un stator (1) amélioré de moteur supraconducteur comprenant un refroidisseur cryogénique (10) en forme d'anneau à l'intérieur duquel sont agencés des enroulements supraconducteurs (12) positionnés chacun sur une structure hybride (16) faite d'un empilement d'au moins des éléments de fer (16a) et des éléments d'un matériau à grande conductivité thermique (16b) tel que de la céramique spéciale, par exemple du saphir, du cuivre, du diamant ou de l'aluminium.

Ainsi, il est possible d'obtenir un rapport optimisé entre la capacité de refroidissement des enroulements supraconducteurs (12) et le poids du stator (1), ce qui est particulièrement avantageux dans le cas d'un moteur supraconducteur d'aéronef comprenant un tel stator (1).

## Description

### DOMAINE TECHNIQUE

La présente invention concerne un moteur dit supraconducteur, notamment du type utilisable pour la propulsion d'un aéronef. L'invention concerne plus particulièrement un stator de moteur d'aéronef comprenant un ensemble de refroidissement cryogénique, ainsi qu'un moteur supraconducteur comprenant un tel stator, et un aéronef.

### ÉTAT DE LA TECHNIQUE ANTÉRIEURE

Les moteurs dits « moteurs supraconducteurs » comprennent une pluralité d'enroulements de rubans réalisés dans un matériau supraconducteur et refroidis à des températures cryogéniques. Le plus souvent, chacun des enroulements d'un tel moteur est pourvu de son propre système de refroidissement cryogénique et tous les systèmes de refroidissements d'enroulements sont reliés entre eux pour être alimentés à partir d'une source de fluide cryogénique commune. Les systèmes de refroidissements sont implémentés au plus près des enroulements supraconducteurs, lesquels peuvent être directement soudés aux systèmes de refroidissements, ou encore être baignés dans un circuit de circulation de fluide cryogénique. Si de telles configurations permettent une extraction aisée des calories générées dans et par les enroulements, elles s'avèrent toutefois encombrantes, lourdes, et parfois même difficiles à industrialiser. En outre, de telles configurations entraînent des gradients de température au sein des enroulements.

La situation peut être améliorée.

### EXPOSÉ DE L'INVENTION

Un objet de la présente invention est de proposer un moteur supraconducteur comprenant un système de refroidissement plus léger et moins volumineux, de sorte à accroître les performances d'un aéronef embarquant un tel moteur, et notamment le rapport entre son poids et la puissance électrique mise en oeuvre à bord de l'aéronef.

A cet effet, il est proposé un stator de moteur supraconducteur comprenant un élément refroidisseur dit « refroidisseur cryogénique » configuré pour y faire circuler un fluide cryogénique, et une pluralité d'enroulements supraconducteurs formant chacun un pôle électromagnétique dudit stator, ledit stator étant configuré de sorte que :
- ledit refroidisseur cryogénique présente une forme globale d'anneau comprenant une paroi intérieure suivant le diamètre intérieur dudit anneau,
- une ou plusieurs structures magnétiques hybrides sont agencées au contact de ladite paroi intérieure, et,
- chacun desdits enroulements supraconducteurs est agencé sur une structure magnétique hybride, du côté opposé de ladite structure magnétique hybride par rapport à ladite paroi intérieure, de sorte que la ou les structures magnétiques hybrides opèrent un transfert de calories entre lesdits enroulement supraconducteurs et ladite paroi intérieure.

Selon l'invention, la ou les structures magnétiques hybrides comprennent un empilement d'au moins de premiers éléments réalisés dans un premier matériau conducteur magnétique, et de deuxièmes éléments réalisés dans un deuxième matériau conducteur thermique et conducteur ou isolant électrique, l'empilement étant tel que les deux extrémités de chacun desdits éléments soient respectivement au contact de ladite paroi intérieure et de l'un desdits enroulements supraconducteurs.

Le stator de moteur supraconducteur selon l'invention peut comprendre en outre les caractéristiques suivantes, considérées seules ou en combinaison :
- le premier matériau est du fer et le deuxième matériau est de la céramique spéciale, par exemple du saphir, du cuivre, du diamant ou de l'aluminium.
- ledit empilement comprend en outre au moins un élément intercalaire agencé entre l'un des premiers éléments et l'un des deuxièmes éléments, ou entre deux des premiers éléments, ou encore entre deux des deuxièmes éléments.
- l'empilement des premiers éléments et des deuxièmes éléments est régulier.
- l'empilement des premiers éléments et des deuxièmes éléments est irrégulier.
- l'empilement comprend entre 70 et 80% de premiers éléments et entre 20 et 30% des deuxièmes éléments.

L'invention a également pour objet un moteur supraconducteur comprenant un stator supraconducteur tel que décrit ci-avant.

Enfin, l'invention a pour objet un aéronef comprenant au moins un moteur supraconducteur tel que précité.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
[Fig. 1] illustre schématiquement un stator de moteur supraconducteur selon un mode de réalisation ;
[Fig. 2] illustre des détails d'implémentation d'une structure magnétique hybride du stator déjà représenté sur la Fig. 1 ; et,
[Fig. 3] illustre un aéronef comprenant un stator supraconducteur selon un mode de réalisation.

### EXPOSÉ DÉTAILLÉ DE MODES DE RÉALISATION

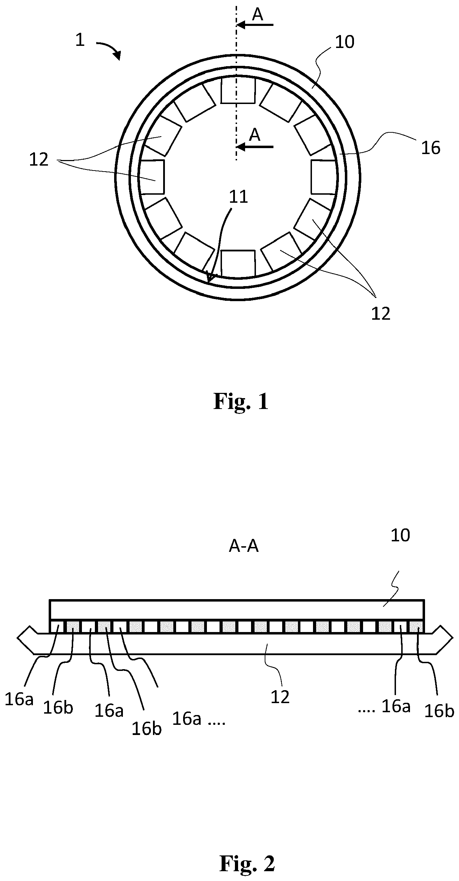

La **Fig. 1** est une représentation schématique d'un stator 1 de moteur supraconducteur. Les termes « moteur supraconducteur » désignent ici un moteur électrique comprenant au moins un élément réalisé à partir d'un matériau supraconducteur et en particulier pour implémenter une fonction d'inducteur de champ électromagnétique. Selon un mode de réalisation, le moteur supraconducteur comprenant le stator 1 est un moteur de propulsion d'un aéronef à propulsion électrique. Le stator 1 opère le rôle d'inducteur dans le moteur qui le comprend, grâce à une pluralité d'enroulements supraconducteurs 12. Chacun des enroulements supraconducteurs 12 comprend au moins un ruban (i.e. une bande) de matériau supraconducteur enroulé sur lui-même. Les enroulements supraconducteurs 12 sont connectés à un module de source de courant (non représenté car non nécessaire à une bonne compréhension de l'invention). Le stator 1 comprend un élément refroidisseur 10, encore appelé « refroidisseur cryogénique » configuré pour y faire circuler un fluide cryogénique tel que, à titre d'exemple, de l'hydrogène liquide pompé depuis un réservoir d'hydrogène liquide à bord d'un aéronef. Le refroidisseur cryogénique 10 comprend pour ce faire une entrée de fluide cryogénique et une sortie de fluide cryogénique. Le refroidisseur cryogénique 10 comprend de plus un agencement interne permettant d'opérer une circulation homogène d'un fluide cryogénique à l'intérieur de lui-même, entre son entrée et sa sortie, de sorte à garantir une bonne homogénéité de température en son corps. Par exemple, le refroidisseur cryogénique 10 comprend un enroulement d'une canalisation cryogénique formant des anneaux à l'intérieur d'un corps massif présentant une forme globale annulaire avec une surface intérieure à l'anneau et une surface extérieure à l'anneau. Selon un mode de réalisation, l'ensemble du stator 1 est de surcroît logé à l'intérieur d'un cryostat. Avantageusement, le refroidisseur cryogénique 10 est donc agencé de sorte à présenter une forme globale d'anneau dans lequel sont disposés les enroulements supraconducteurs 12 opérant conjointement la fonction d'inducteur du moteur qui comprend le stator 1. Avantageusement et selon un mode de réalisation, le refroidisseur cryogénique 10 présentant une forme annulaire comprend une surface intérieure 11 suivant le diamètre intérieur de l'anneau formé par la forme globale du refroidisseur cryogénique 10. En d'autres termes, la surface intérieure 11 présente un agencement suivant le diamètre intérieur de l'anneau formé, par opposition à une surface extérieure, laquelle agencée suivant le diamètre extérieur de l'anneau formé. En d'autres termes encore, chacun des points de la surface intérieure 11 du refroidisseur cryogénique 10 a pour tangente un rayon d'un cercle formé par la surface intérieure 11.

Astucieusement, le stator 1 comprend, agencé entre le refroidisseur cryogénique 10 et les différents enroulements supraconducteurs 12 une ou plusieurs structures magnétiques hybrides 16, disposées à la fois au contact du refroidisseur cryogénique 10 et d'un ou plusieurs enroulement supraconducteurs 12. De préférence, le stator 1 comprend une unique structure magnétique hybride 16 pour tous les enroulements supraconducteurs 12. Une coupe partielle A-A du stator 1 de la Fig. 1 forme la **Fig. 2** qui illustre des détails d'implémentation de la structure magnétique hybride 16 ou des structures magnétiques hybrides 16, le cas échéant. Selon un mode de réalisation, la structure magnétique 16 est un empilement de premiers éléments 16a et de deuxièmes éléments 16b formant une structure magnétique hybride unique, de forme globale elle aussi annulaire, concentrique avec le refroidisseur cryogénique 10 et également concentrique avec la couronne d'enroulements supraconducteurs 12 que forment ces derniers régulièrement disposés à l'intérieur de l'anneau que forme le refroidisseur cryogénique 10. Selon une variante, chacun des enroulements supraconducteurs 12 est agencé sur sa propre structure magnétique hybride 16, indépendante de la structure magnétique hybride d'un enroulement supraconducteur 12 voisin dans la couronne d'éléments supraconducteurs 12 que forment ensemble tous les éléments supraconducteurs 12. Cette configuration permet d'alléger le poids du stator lorsque des enroulements supraconducteurs 12 voisins les uns des autres sont relativement distants.

La Fig.2 détaille l'empilement comprenant au moins les premiers éléments 16a et les deuxièmes éléments 16b, agencés pour former une alternance (un empilement) entre les deux types d'éléments, l'empilement s'étendant selon un axe parallèle à l'axe longitudinal du stator 1. L'alternance entre les premiers éléments 16a et les deuxièmes éléments 16b peut être régulière. De préférence, l'alternance entre les premiers éléments 16a et les deuxièmes éléments 16b est irrégulière. Selon un mode de réalisation préféré, les premiers éléments 16a sont en fer et les deuxièmes éléments 16b sont en céramique spéciale, par exemple en saphir, ou en cuivre, ou en diamant ou encore en aluminium. Ces exemples ne sont pas limitatifs et d'autres matériaux peuvent être utilisés dès lors que le matériau utilisé pour les premiers éléments est un bon conducteur magnétique et électrique et que le matériau utilisé pour les deuxièmes éléments est un bon conducteur thermique. Par exemple, l'empilement peut comprendre entre 70 et 80% de premiers éléments 16a, et entre 20 et 30% de deuxièmes éléments 16b. Ainsi, il est avantageusement possible d'obtenir un rapport optimisé entre la capacité de refroidissement des enroulements supraconducteurs 12 et le poids du stator 1, ce qui est particulièrement avantageux dans le cas d'un moteur supraconducteur d'aéronef. Selon des variantes de réalisation, la ou les structures magnétiques hybrides 16 peuvent comprendre des éléments intercalaires disposés entre des éléments tels que précités, notamment aux fins d'amoindrir les coûts de production de la ou des structures magnétiques hybrides, sans toutefois réduire conséquemment l'efficacité d'une telle structure hybride. Il est ainsi possible de bénéficier d'un faible gradient de température entre le refroidisseur cryogénique 10 et les enroulements supraconducteurs 12 du stator 1, ce qui correspond à un refroidissement amélioré de ces derniers, du fait de leur maintien à une température très basse.

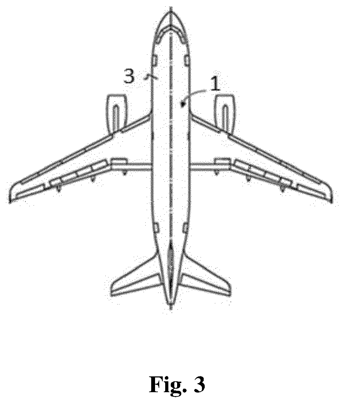

La **Fig. 3** représente un aéronef 3 comprenant avantageusement un moteur supraconducteur pourvu d'un stator semblable au stator 1 décrit ci-avant, ce qui permet d'obtenir une très grande densité de puissance pour le système de propulsion de l'aéronef et d'accroître ainsi ses performances de vol.

## Revendications

1. Stator (1) de moteur supraconducteur comprenant un élément refroidisseur (10) dit « refroidisseur cryogénique » (10) configuré pour y faire circuler un fluide cryogénique, et une pluralité d'enroulements supraconducteurs (12) formant chacun un pôle électromagnétique dudit stator, ledit stator (1) étant **caractérisé en ce que** :
- ledit refroidisseur cryogénique (10) présente une forme globale d'anneau comprenant une paroi intérieure (11) suivant le diamètre intérieur dudit anneau,
- une ou plusieurs structures magnétiques hybrides (16) sont agencées au contact de ladite paroi intérieure, la ou les structures magnétiques hybrides (16) comprenant un empilement d'au moins de premiers éléments (16a) réalisés dans un premier matériau conducteur magnétique et de deuxièmes éléments (16b) réalisés dans un deuxième matériau conducteur thermique, l'empilement étant tel que les deux extrémités de chacun desdits premiers et deuxièmes éléments soient respectivement au contact de ladite paroi intérieure (11) et de l'un desdits enroulements supraconducteurs (16), et,
- chacun desdits enroulements supraconducteurs (12) est agencé sur une structure magnétique hybride (16), du côté opposé de ladite structure magnétique hybride (16) par rapport à ladite paroi intérieure (11), de sorte que la ou les structures magnétiques hybrides (16) opèrent un transfert de calories entre lesdits enroulement supraconducteurs (12) et ladite paroi intérieure (11).

2. Stator (1) de moteur supraconducteur selon la revendication 1, dans lequel le premier matériau est du fer et dans lequel le deuxième matériau est du saphir, du cuivre, du diamant ou de l'aluminium.

3. Stator (1) de moteur supraconducteur, selon l'une des revendications 1 et 2, dans lequel ledit empilement comprend en outre au moins un élément intercalaire agencé entre l'un desdits premiers éléments (16a) et l'un desdits deuxièmes éléments (16b), ou entre deux desdits premiers éléments (16a), ou entre deux desdits deuxièmes éléments (16b).

4. Stator (1) de moteur supraconducteur, selon l'une des revendications 1 à 3, dans lequel l'empilement des premiers éléments (16a) et des deuxièmes éléments (16b) est régulier.

5. Stator (1) de moteur supraconducteur, selon l'une des revendications 1 à 3, dans lequel l'empilement des premiers éléments (16a) et des deuxièmes éléments (16b) est irrégulier.

6. Stator (1) de moteur supraconducteur, selon l'une des revendications 1 à 5, dans lequel l'empilement comprend entre 70 et 80% de premiers éléments (16a) et entre 20 et 30% des deuxièmes éléments (16b).

7. Moteur supraconducteur comprenant un stator supraconducteur selon l'une des revendications 1 à 6.

8. Aéronef (3) comprenant au moins un moteur supraconducteur selon la revendication 7.
